# EUROPEAN PATENT APPLICATION

(11) **EP 4 760 568 A1**
(43) Date of publication of application: **17.06.2026**
(21) Application number: 23950239.6
(22) Date of filing: 31.08.2023
(51) Int. Cl.: G06F 21/56

(54) **MULTI-STAGE VERIFICATION METHOD AND APPARATUS FOR MOBILE STORAGE, AND STORAGE MEDIUM**

(71) Applicant: Siemens Aktiengesellschaft, 80333 München (DE)
(72) Inventor: GUO, Dai Fei, Beijing 100102 (CN)
(74) Representative: Isarpatent
(86) International application number: PCT/CN2023/116322
(87) International publication number: WO 2025/043657

(57) **Abstract**

The present invention provides a multi-stage verification method and apparatus for mobile storage, and a storage medium. The method includes: obtaining, by a central security monitoring system when mobile storage is in use, a multi-stage scanning result of the mobile storage; determining, based on the multi-stage scanning result, whether the mobile storage has been scanned and whether the multi-stage scanning result is normal; if not, prohibiting use of the mobile storage and giving an alarm; providing a use permission for the mobile storage in stages, and scanning the mobile storage based on a scanning rule corresponding to the use permission, to obtain a current scanning result; and determining whether a portion in the multi-stage scanning result that corresponds to the current scanning result matches the current scanning result: if so, providing a next-stage use permission; and if not, locking the mobile storage and giving an alarm. According to technical solutions in embodiments of the present invention, scanning precision of a mobile storage device can be improved, and a speed of used mobile storage can be increased, to prevent malicious software from bypassing basic inspection, and improve security.

## Description

### TECHNICAL FIELD

The present invention relates to the field of information security, and in particular, to a multi-stage verification method and apparatus for mobile storage, and a storage medium.

### BACKGROUND

Mobile storage or data exchange in an industrial control system may pose significant threats to the industrial control system. Even if the industrial control system is isolated from the Internet and an IT network through physical or logical security measures, malicious software or Trojans may infect a target system in the industrial control system through mobile storage. Since the malicious software infected the industrial control system through a mobile storage device, numerous security incidents occurred to cause production interruptions.

At present, some mobile storage device management methods or systems are provided to control use of mobile storage in OT (Operation Technology) systems. USB control software may limit use of the mobile storage device, and only a processed mobile storage device can be used in a target system. However, the software requires an agent to be installed in the target system to control use of an external interface and to check and determine whether the mobile storage device may be used in the target system. This may cause a compatibility problem and reduce performance of the target system. Even in some scenarios, normal operation of an OT device may be affected.

### SUMMARY

To achieve the foregoing objective, the present invention provides a multi-stage verification method and apparatus for mobile storage, and a storage medium, so that scanning precision of a mobile storage device can be improved, and a speed of used mobile storage can be increased, to prevent malicious software from bypassing basic inspection, and improve security.

The multi-stage verification method for mobile storage provided in embodiments of the present invention includes: obtaining a multi-stage scanning result, where when the mobile storage is in use, a central security monitoring system obtains the multi-stage scanning result of the mobile storage; verifying the multi-stage scanning result, and determining, based on the multi-stage scanning result, whether the mobile storage has been scanned and whether the multi-stage scanning result is normal: if not, prohibiting use of the mobile storage and giving an alarm; performing stage-by-stage verification, providing a use permission for the mobile storage in stages, and scanning the mobile storage based on a scanning rule corresponding to the use permission, to obtain a current scanning result; and determining whether a portion in the multi-stage scanning result that corresponds to the current scanning result matches the current scanning result; if so, providing a next-stage use permission; and if not, locking the mobile storage and giving an alarm. Through stage-by-stage verification in a plurality of stages, malicious software may be scanned through a multi-stage policy to improve scanning speed and precision.

In an implementation, before the mobile storage is used, the multi-stage scanning is performed on the mobile storage through a scanning system, to obtain the multi-stage scanning result, and the multi-stage scanning result is stored in the central security monitoring system. Through the scanning system, occupation of actual system resources for antivirus scanning is avoided.

The multi-stage verification apparatus for mobile storage provided in embodiments of the present invention includes: a multi-stage scanning result obtaining module, configured to, when the mobile storage is in use, obtain the multi-stage scanning result of the mobile storage through a central security monitoring system; a multi-stage scanning result verification module, configured to: determine, based on the multi-stage scanning result, whether the mobile storage has been scanned and whether the multi-stage scanning result is normal; and if not, prohibit use of the mobile storage and give an alarm; and a multi-stage verification module, configured to provide a use permission for the mobile storage in stages, and scan the mobile storage based on a scanning rule corresponding to the use permission to obtain a current scanning result; determine whether a portion in the multi-stage scanning result that corresponds to the current scanning result matches the current scanning result; if so, provide a next-stage use permission; and if not, lock the mobile storage and give an alarm. Through stage-by-stage verification in a plurality of stages, malicious software may be scanned through a multi-stage policy to improve scanning speed and precision.

In an implementation, before the mobile storage is used, the multi-stage scanning is performed on the mobile storage through a scanning system, to obtain the multi-stage scanning result, and the multi-stage scanning result is stored in the central security monitoring system. Through the scanning system, occupation of actual system resources for antivirus scanning is avoided.

Embodiments of the present invention provide an electronic device, including: at least one processor; and a memory coupled to the at least one processor, where the memory is configured to store instructions, and the instructions, when executed by the at least one processor, enable the at least one processor to perform the method described above.

Embodiments of the present invention provide a computer-readable storage medium, having computer instructions stored thereon. The computer instructions, when executed, perform the method according to any one of the implementations described above.

Embodiments of the present invention provide a computer program product, including a computer program. The computer program, when executed by the processor, performs the method according to any one of the implementations described above.

### BRIEF DESCRIPTION OF THE DRAWINGS

The following drawings are only intended to schematically illustrate and explain the present invention, but are not intended to limit the scope of the present invention. Specifically,
FIG. 1 is a schematic flowchart of a multi-stage verification method 100 for mobile storage according to an embodiment of the present invention.
FIG. 2 is a schematic structural diagram of a multi-stage verification apparatus 200 for mobile storage according to an embodiment of the present invention.
FIG. 3 is a schematic diagram of an electronic device 300 according to an embodiment of the present invention.

Reference numerals are described as follows:

| Number | Meaning |
|---|---|
| 100 | Multi-stage verification method for mobile storage |
| S101 | Obtain a multi-stage scanning result |
| S102 | Verify the multi-stage scanning result |
| S103 | Perform stage-by-stage verification |
| 200 | Multi-stage verification apparatus for mobile storage |
| 201 | Multi-stage scanning result obtaining module |
| 202 | Multi-stage scanning result verification module |
| 203 | Multi-stage verification module |
| 300 | Electronic device |
| 310 | Processor |
| 320 | Memory |

### DETAILED DESCRIPTION

To provide a clearer understanding of the technical features, objectives, and effects of the present invention, specific implementations of the present invention are described with reference to the drawings.

Many specific details are set forth in the following description to facilitate a full understanding of the present invention, but the present invention may further be implemented in other manners different from those described herein. Therefore, the present invention is not limited by specific embodiments disclosed below.

As shown in this application and the claims, words such as "a/an", "one", "one kind", and/or "the" do not refer specifically to singular forms and may also include plural forms, unless the context expressly indicates an exception. In general, terms "comprise" and "include" merely indicate including clearly identified steps and elements. However, the steps and elements do not constitute an exclusive list, and a method or a device may also include other steps or elements.

In some OT management processes, a mobile storage device needs to be scanned for malicious software on a dedicated host before being used in an OT system. However, it is difficult to check whether the mobile storage device has been scanned previously in the OT system. In many scenarios, an operator or an engineer may not perform scanning due to a lack of security awareness, or directly use any mobile storage in the OT system in some emergency scenarios. These violations pose a great threat and cannot be easily detected.

Before the mobile storage is used in the OT system, a scanning status of the mobile storage may be checked. However, it is difficult to scan the status of the entire mobile storage in a short time, which may affect user experience.

Therefore, to provide a more optimized mobile storage scanning method, in embodiments of the present invention, when the mobile storage is in use, a multi-stage scanning result of the mobile storage is obtained by a central security monitoring system. Based on the multi-stage scanning result, whether the mobile storage has been scanned and whether the multi-stage scanning result is normal is determined. If not, use of the mobile storage is prohibited, and an alarm is given. A use permission for the mobile storage is provided in stages, and the mobile storage is scanned based on a scanning rule corresponding to the use permission, to obtain a current scanning result. Whether a portion in the multi-stage scanning result that corresponds to the current scanning result matches the current scanning result is determined. If so, a next-stage use permission is provided. If not, the mobile storage is locked and an alarm is given. According to technical solutions in embodiments of the present invention, scanning precision of a mobile storage device can be improved, and a speed of used mobile storage can be increased, to prevent malicious software from bypassing basic inspection, and improve security.

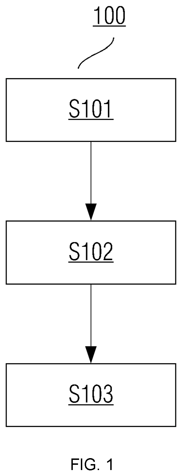

FIG. 1 is a schematic flowchart of a multi-stage verification method 100 for mobile storage in an embodiment of the present invention. As shown in FIG. 1, the method 100 includes:
Step S101: Obtain a multi-stage scanning result, where, when the mobile storage is in use, a central security monitoring system obtains the multi-stage scanning result of the mobile storage.

In an implementation, before the mobile storage is used, the multi-stage scanning is performed on the mobile storage through a scanning system, to obtain the multi-stage scanning result, and the multi-stage scanning result is stored in the central security monitoring system.

Specifically, the scanning system may update a malicious software library through an update server provided by an anti-malware software manufacturer through the Internet. The scanning system sends a scanning result and security status information to the central security monitoring system. If the mobile storage does not have malicious software and passes malicious software scanning, the scanning system generates a multi-stage result abstract and obtains a mobile storage ID. Multi-stage scanning may be customized by an administrator based on a performance requirement and a scanning time requirement. In addition to full-disk malicious software scanning using a plurality of anti-malware software engines, the multi-stage scanning also conducts various inspections to find a possible file modification in the mobile storage.

In an implementation, the multi-stage scanning result further includes:
a first stage: a last update time, a scanning time, and disk usage;
a second stage: a hash value of an executable file, a file modification log, and a quantity of files; and
a third stage: a hash value of a key file and a modification time of any file that is possibly infected.

Step S102: Verify the multi-stage scanning result, and determine, based on the multi-stage scanning result, whether the mobile storage has been scanned and whether the multi-stage scanning result is normal: if not, prohibit use of the mobile storage and give an alarm.

Specifically, when the mobile storage is used in an OT device, trust analysis is performed by requesting a status of a scanning result having an ID of the mobile storage.

Step S103: Perform stage-by-stage verification, providing a use permission for the mobile storage in stages, and scanning the mobile storage based on a scanning rule corresponding to the use permission, to obtain a current scanning result; and determine whether a portion in the multi-stage scanning result that corresponds to the current scanning result matches the current scanning result; if so, provide a next-stage use permission; and if not, lock the mobile storage and give an alarm.

Specifically, when one piece of mobile storage is used in the OT device, a status check is performed based on a multi-stage policy. If the mobile storage passes quick scanning based on a first-stage policy, the mobile storage may be recognized and used by the OT device having a limited permission. Then, second-stage scanning and third-stage scanning are performed in idle time based on the multi-stage policy. However, before entire scanning is completed, the mobile storage can only be accessed with a limited permission.

In an implementation, the use permission includes:
a first stage: listing all files, prohibiting access to any executable file or a file possibly infected by malicious software, and prohibiting automatic execution of any application or script;
a second stage: listing all files, copying and editing a file impossibly infected by the malicious software, prohibiting access to any executable file or a file possibly infected by malicious software, and prohibiting automatic execution of any application or script; and
a third stage: listing all files, copying and editing an executable file, copying and editing the file impossibly infected by the malicious software, prohibiting access to any executable file or a file possibly infected by malicious software, and prohibiting automatic execution of any application or script.

In an implementation, the scanning rule corresponding to the use permission further includes:
a first stage: a last update time, a scanning time, and disk usage;
a second stage: a hash value of an executable file, a file modification log, and a quantity of files; and
a third stage: a hash value of a key file and a modification time of any file that is possibly infected.

In an implementation, after the mobile storage passes the stage-by-stage verification, the method further includes: providing all use permissions of the mobile storage.

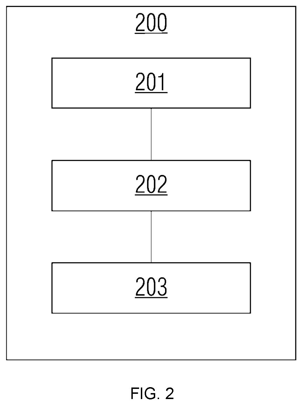

FIG. 2 is a schematic structural diagram of a multi-stage verification apparatus 200 for mobile storage in an embodiment of the present invention. As shown in FIG. 2, the apparatus 200 may include:
a multi-stage scanning result obtaining module 201, configured to: when the mobile storage is in use, obtain the multi-stage scanning result of the mobile storage through a central security monitoring system.

In an implementation, before the mobile storage is used, the multi-stage scanning is performed on the mobile storage through a scanning system, to obtain the multi-stage scanning result, and the multi-stage scanning result is stored in the central security monitoring system.

Specifically, the scanning system may update a malicious software library through an update server provided by an anti-malware software manufacturer through the Internet. The scanning system sends a scanning result and security status information to the central security monitoring system. If the mobile storage does not have malicious software and passes malicious software scanning, the scanning system generates a multi-stage result abstract and obtains a mobile storage ID. Multi-stage scanning may be customized by an administrator based on a performance requirement and a scanning time requirement. In addition to full-disk malicious software scanning using a plurality of anti-malware software engines, the multi-stage scanning also conducts various inspections to find a possible file modification in the mobile storage.

In an implementation, the multi-stage scanning result further includes:
a first stage: a last update time, a scanning time, and disk usage;
a second stage: a hash value of an executable file, a file modification log, and a quantity of files; and
a third stage: a hash value of a key file and a modification time of any file that is possibly infected.

A multi-stage scanning result verification module 202 is configured to: determine based on the multi-stage scanning result, whether the mobile storage has been scanned and whether the multi-stage scanning result is normal; and if not, prohibit use of the mobile storage and give an alarm.

Specifically, when the mobile storage is used in an OT device, trust analysis is performed by requesting a status of a scanning result having an ID of the mobile storage.

A multi-stage verification module 203 is configured to provide a use permission for the mobile storage in stages, and scan the mobile storage based on a scanning rule corresponding to the use permission to obtain a current scanning result; determine whether a portion in the multi-stage scanning result that corresponds to the current scanning result matches the current scanning result; if so, provide a next-stage use permission; and if not, lock the mobile storage and give an alarm.

Specifically, when one piece of mobile storage is used in the OT device, a status check is performed based on a multi-stage policy. If the mobile storage passes quick scanning based on a first-stage policy, the mobile storage may be recognized and used by the OT device having a limited permission. Then, second-stage scanning and third-stage scanning are performed in idle time based on the multi-stage policy. However, before entire scanning is completed, the mobile storage can only be accessed with a limited permission.

In an implementation, the use permission includes:
a first stage: listing all files, prohibiting access to any executable file or a file possibly infected by malicious software, and prohibiting automatic execution of any application or script;
a second stage: listing all files, copying and editing a file impossibly infected by the malicious software, prohibiting access to any executable file or a file possibly infected by malicious software, and prohibiting automatic execution of any application or script; and
a third stage: listing all files, copying and editing an executable file, copying and editing the file impossibly infected by the malicious software, prohibiting access to any executable file or a file possibly infected by malicious software, and prohibiting automatic execution of any application or script.

In an implementation, the scanning rule corresponding to the use permission further includes:
a first stage: a last update time, a scanning time, and disk usage;
a second stage: a hash value of an executable file, a file modification log, and a quantity of files; and
a third stage: a hash value of a key file and a modification time of any file that is possibly infected.

In an implementation, the multi-stage verification module 203 is further configured to provide all use permissions for the mobile storage after the mobile storage passes the stage-by-stage verification.

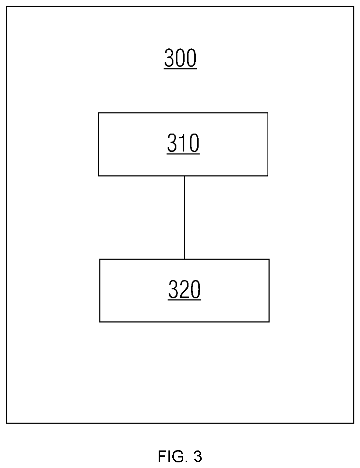

The present invention further provides an electronic device 300. FIG. 3 is a schematic diagram of an electronic device 300 according to an embodiment of the present invention. As shown in FIG. 3, the electronic device 300 includes a processor 310 and a memory 320. The memory 320 stores instructions, and the instructions are executed by the processor 310 to implement the method 100 described above.

The present invention further provides a computer-readable storage medium, storing computer instructions, where the computer instructions, when executed, perform the method described above.

The present invention further provides a computer program product, including a computer program. The computer program, when executed by the processor, performs the method according to any one of the implementations described above.

Some aspects of the method and apparatus of the present invention may be entirely executed by hardware, may be entirely executed by software (including firmware, resident software, microcode, and the like), or may be executed by a combination of hardware and software. The foregoing hardware or software may be referred to as a "data block", a "module", an "engine", a "unit", a "component", or a "system". A processor may be one or more application specific integrated circuits (ASICs), digital signal processors (DSPs), digital signal processing devices (DAPDs), programmable logic devices (PLCs), field programmable gate arrays (FPGAs), processors, controllers, microcontrollers, microprocessors, or a combination thereof. In addition, aspects of this application may be embodied as a computer product located in one or more computer-readable media. The product includes a computer-readable program code. For example, the computer-readable medium may include, but is not limited to, a magnetic storage device (for example, a hard disk, a floppy disk, a magnetic tape ...), an optical disk (for example, a compact disk (CD), a digital versatile disk (DVD) ...), a smart card, and a flash memory device (for example, a card, a stick, and a key driver).

Flowcharts are used for describing operations performed by the method according to embodiments of this application herein. It should be understood that the foregoing operations may not be performed accurately in order. On the contrary, various steps may be performed in a reverse order or simultaneously. In addition, other operations are added to these processes, or one or several operations are removed from these processes.

It should be understood that although this specification is described according to each embodiment, not every embodiment includes only one independent technical solution. Such a description manner of this specification is merely for clarity. The specification should be considered as a whole by a person skilled in the art, and the technical solution in each embodiment may also be properly combined, to form other implementations that can be understood by the person skilled in the art.

The foregoing description is merely the illustrative specific implementation of the present invention, and is not intended to limit the scope of the present invention. Any equivalent change, modification, and combination made by a person skilled in the art without departing from the conception and principles of the present invention shall all fall within the protection scope of the present invention.

## Claims

1. A multi-stage verification method (100) for mobile storage, wherein the method comprises:
obtaining a multi-stage scanning result (S101), wherein when the mobile storage is in use, a central security monitoring system obtains the multi-stage scanning result of the mobile storage;
verifying the multi-stage scanning result (S102), and determining, based on the multi-stage scanning result, whether the mobile storage has been scanned and whether the multi-stage scanning result is normal:
if not, prohibiting use of the mobile storage and giving an alarm;
performing stage-by-stage verification (S103), providing a use permission for the mobile storage in stages, and scanning the mobile storage based on a scanning rule corresponding to the use permission, to obtain a current scanning result; and determining whether a portion in the multi-stage scanning result that corresponds to the current scanning result matches the current scanning result;
if so, providing a next-stage use permission; and if not, locking the mobile storage and giving an alarm.

2. The method according to claim 1, wherein before the mobile storage is used, multi-stage scanning is performed on the mobile storage through a scanning system to obtain the multi-stage scanning result, and the multi-stage scanning result is stored in the central security monitoring system.

3. The method according to claim 2, wherein the multi-stage scanning result further comprises:
a first stage: a last update time, a scanning time, and disk usage;
a second stage: a hash value of an executable file, a file modification log, and a quantity of files; and
a third stage: a hash value of a key file and a modification time of any file that is possibly infected.

4. The method according to claim 1, wherein the use permission comprises:
a first stage: listing all files, prohibiting access to any executable file or a file possibly infected by malicious software, and prohibiting automatic execution of any application or script;
a second stage: listing all files, copying and editing a file impossibly infected by the malicious software, prohibiting access to any executable file or a file possibly infected by malicious software, and prohibiting automatic execution of any application or script; and
a third stage: listing all files, copying and editing an executable file, copying and editing the file impossibly infected by the malicious software, prohibiting access to any executable file or a file possibly infected by malicious software, and prohibiting automatic execution of any application or script.

5. The method according to claim 1, wherein the scanning rule corresponding to the use permission further comprises:
a first stage: a last update time, a scanning time, and disk usage;
a second stage: a hash value of an executable file, a file modification log, and a quantity of files; and
a third stage: a hash value of a key file and a modification time of any file that is possibly infected.

6. The method according to claim 1, wherein after the mobile storage passes the stage-by-stage verification, the method further comprises:
providing all use permissions for the mobile storage.

7. A multi-stage verification apparatus (200) for mobile storage, wherein the apparatus comprises:
a multi-stage scanning result obtaining module (201), configured to: when the mobile storage is in use, obtain the multi-stage scanning result of the mobile storage through a central security monitoring system;
a multi-stage scanning result verification module (202), configured to: determine, based on the multi-stage scanning result, whether the mobile storage has been scanned and whether the multi-stage scanning result is normal; and
if not, prohibit use of the mobile storage and give an alarm; and
a multi-stage verification module (203), configured to provide a use permission for the mobile storage in stages, and scan the mobile storage based on a scanning rule corresponding to the use permission to obtain a current scanning result; determine whether a portion in the multi-stage scanning result that corresponds to the current scanning result matches the current scanning result:
if so, provide a next-stage use permission; and if not, lock the mobile storage and give an alarm.

8. The apparatus according to claim 7, wherein before the mobile storage is used, multi-stage scanning is performed on the mobile storage through a scanning system, to obtain the multi-stage scanning result, and the multi-stage scanning result is stored in the central security monitoring system.

9. The apparatus according to claim 8, wherein the multi-stage scanning result further comprises:
a first stage: a last update time, a scanning time, and disk usage;
a second stage: a hash value of an executable file, a file modification log, and a quantity of files; and
a third stage: a hash value of a key file and a modification time of any file that is possibly infected.

10. The apparatus according to claim 7, wherein the use permission comprises:
a first stage: listing all files, prohibiting access to any executable file or a file possibly infected by malicious software, and prohibiting automatic execution of any application or script;
a second stage: listing all files, copying and editing a file impossibly infected by the malicious software, prohibiting access to any executable file or a file possibly infected by malicious software, and prohibiting automatic execution of any application or script; and
a third stage: listing all files, copying and editing an executable file, copying and editing the file impossibly infected by the malicious software, prohibiting access to any executable file or a file possibly infected by malicious software, and prohibiting automatic execution of any application or script.

11. The apparatus according to claim 7, wherein the scanning rule corresponding to the use permission further comprises:
a first stage: a last update time, a scanning time, and disk usage;
a second stage: a hash value of an executable file, a file modification log, and a quantity of files; and
a third stage: a hash value of a key file and a modification time of any file that is possibly infected.

12. The apparatus according to claim 7, wherein the multi-stage verification module (203) is further configured to:
provide all use permissions for the mobile storage after the mobile storage passes the stage-by-stage verification.

13. An electronic device (300), comprising:
at least one processor (310); and
a memory (320) coupled to the at least one processor (310), wherein the memory (320) is configured to store instructions, and the instructions, when executed by the at least one processor (310), enable the processor (310) to perform the method according to any one of claims 1 to 6.

14. A computer-readable storage medium, storing computer instructions, wherein the computer instructions, when executed, perform the method according to any one of claims 1 to 6.

15. A computer program product, comprising a computer program, wherein the computer program, when executed by the processor, performs the method according to any one of claims 1 to 6.
